# EUROPEAN PATENT APPLICATION

(11) **EP 2 430 925 A1**
(43) Date of publication of application: **21.03.2012**
(21) Application number: 10177663.1
(22) Date of filing: 20.09.2010
(51) Int. Cl.: A23L 1/222

(54) **Transformation of spent vanilla materials**

(71) Applicant: Ivica, Labuda Dr., Norwood NJ 07648 (US)
(72) Inventor: Ivica, Labuda Dr., Norwood NJ 07648 (US)
(74) Representative: Hedges, Martin Nicholas

(57) **Abstract**

Process for obtaining flavour constituents from Spent Vanilla and marks. The Vanilla materials are ground to increase their exposure to enzyme activity, after which an aqurous mixture of the ground materials is formed. The mixture is agitated to form a surrey consisting of liquid and solid phase and the surrey treated with a micro organism selected from the group consisting of bacteria and yeast and having the ability to produce an enzyme capable of degrading the plant cell system of the material for a period of time and that a pH and temperature such that the said cell system break down and release their flavour constituents. The enzyme is selected from a group consisting of β-glucosidase and other enzymes. The mixture is incubated for a period of time sufficient to effect substantially complete reaction and release of the constituents, and the flavour constituents are then recovered from the mixture.

## Description

### FIELD OF THE INVENTION

The present invention relates generally to treatment of spent products normally discarded or used for a low-cost purpose in order to rejuvenate the products and obtain high-cost materials therefrom. More specifically it relates a process for the production of natural flavor and modifier extracts obtained by the treatment of spent vanilla pods and beans normally discarded or used for low-cost animal feed.

### BACKGROUND OF THE INVENTION

Plants represent a rich pool of bioactive compounds. Vanilla is one of those plants; it is used for the production of natural vanilla flavor. Besides its obvious flavoring capacity, it can also be used as an anti-oxidant and microbial agent. Vanilla extract is obtained from cured vanilla pods by ethanol extraction. Vanilla extract contains about 60 to 80 different flavor components, of which vanillin is the major flavor component. In the past several decades a number of patents, *e.g*., U.S. Patent Nos. 4,874,701, 4,981,7952,195,871, 5,017,388, 5,262,315 and 5,128,253, and Japanese Patent Nos. 2,195,871 and 5,227,980, relate to the formation of vanilla flavors. These patents suggest various approaches using renewable, cheap and natural raw material sources such as ferulic acid, vanillic acid, vanillyl alcohol, eugenol, etc., employing either microorganisms, tissue cultures or enzymes, for vanillin formation.

Enzymes are widely used as a class of biocatalytic reagents in a wide variety of reactions including, e.g., oxidations, reductions, hydrolyses, and carbon-carbon bond ligations. Based on the nature of the solvent used, the enzymes can perform either a hydrolytic or a synthetic catalysis. Biocatalysts are valued for their intrinsic abilities to bind organic substrates and to catalyze specific and selective reactions under the mildest of reaction conditions. These selectivities and specificities are realized because of interactions occurring between the enzyme active site and the substrate molecule. Biocatalytic reactions are particularly useful when a traditional chemical catalysis is difficult and expensive to complete. Enzymes differ in their specificity towards substrates; some are highly selective while others accept a wide variety of substrates. In furtherance of that knowledge, I have treated spent vanilla materials with certain enzymes to obtain vanilla flavor constituents from materials that would otherwise have little if any commercial value.

Selective reduction of aromatic acids to their corresponding aldehydes by Actinomycetes sp. was reported by Jezo and Zemek (1986). Enzymes such as aryl-aldehyde oxidoreductase (carboxylic acid reductase EC 1.2.1.30) catalyze the formation of vanillin from vanillic acid (Rosazza et al., 1998, US 5,795,759). Cellulases (endoglucanase, cellobiohydrolase, cellobiase, β-glucosidase, etc.) on the other hand hydrolyze the β-covalent bond between glucose units in cellulose chains.

The development of the vanilla flavor during the curing treatment is partly due to the hydrolysis of a glucosylated precursor. An example of such glycoside is vanillin glucoside, which occurs in green vanilla pods (Arana. F.E., 1943, Food Research, vol. 8, pages 343-351). Precise biochemical pathways leading to all flavor components of vanilla are not known. Many flavor compounds are bound in plants and microorganisms, simply to protect the cells against the toxicity of these compounds. An enzyme breaking the glycosidic bond releases the flavor compound from its bond. An example of this phenomenon is an enzyme β-glucosidase, which hydrolyses the β-covalent bond of glucose from an aglycone. Two patents (US 5,705,205 and FR-A-2,634,979) focused on the green vanilla beans and their curing process, during which the flavor develops. Flavor enhancement and efficiency of the curing process was central to these two patents.

At the industrial level, vanilla extract is obtained from vanilla pods that have been successfully cured. U.S. Patent No. 5,705,205 suggests usage of β-glucosidase to shorten the curing process of green vanilla beans. Another patent FR-A-2,634,979 (1990) describes a process during which the green pods are frozen at a temperature of between -5 and -30 degrees C. and then reheated before extracting the flavor constituents therefrom. This process makes it possible to shorten the curing time and avoids losses of the flavor compounds which can occur during the curing process due to microbial or enzymatic decomposition. The typical curing process does not allow for the addition of external enzymes, only enzymes naturally present in the vanilla beans are employed in the curing process. Once the vanilla beans are cured the flavor compounds are extracted with ethanol. The remaining vanilla beans after the extraction are called spent or exhausted vanilla beans. These beans are typically used for animal feed and in very small quantities as food additives to give a visual impression of vanilla flavor, *e.g*., in vanilla ice cream. It is generally believed that most of the flavor is extracted during the extraction process and that these spent vanilla beans contain very minute amounts of flavor compounds.

Based on the forgoing background, it is an important object of the present invention to provide a process during which additional flavor compounds and food modifiers are released or transformed from complexes in spent vanilla beans and pods, thereby obtaining additional vanilla flavors and food modifiers from the spent materials.

I have now discovered that such object is obtainable in two basic but related ways: (1) employing enzymes directly to break down the spent vanilla materials, and (2) treating the spent vanilla materials with microorganisms that will themselves produce the enzymatic action that results in the production of flavor constituents. While the materials can be directly treated with enzymes, microoorganisms such as bacteria and yeast are capable of producing enzymes such as hydrolases, oxidoreductases and transferases. So, when treated with such microorganisms, stable substrates such as vanilla materials are metabolized or modified. Indeed, during this biotransformation process in which a substrate is treated with certain microorganisms, more than a single enzyme may be produced and the result is the achievement of a more varied and advantageous flavor than when a single enzyme is utilized.

### SUMMARY OF THE INVENTION

My invention is directed to a process for preparing natural flavor compounds from spent vanilla beans or pods which, in a complete, commercial process, comprises the following steps. First the spent vanilla pods and/or beans are ground or otherwise subdivided. Then they are hydrated to form a ground, hydrated product having a liquid phase and a solid phase. The next process step is treating the ground, hydrated product with an enzymatic system that contains at least one enzyme capable of degrading the plant cells or transforming the flavor precursors in spent vanilla materials, *e.g*., vanilla beans and pods. Alternatively, microorganisms having the capacity to produce at least one enzyme capable of degrading the plant cells or transforming the flavor precursors are used to treat the vanilla product. The microorganism is selected from the group consisting of bacteria, fungi and yeast and mixtures thereof. The enzyme produced by the microorganism or added directly is selected from the group consisting of an enzyme having pectinase activity, an enzyme having cellulase activity, an enzyme having hemicellulase activity, an enzyme having oxidoreductase activity, an enzyme having lipase activity, an enzyme having protease activity, an enzyme having transferase activity, and mixtures thereof. The subdivided, hydrated product containing the microbial system is incubated at general conditions of temperature that will vary, but will generally be that sufficient to promote enzymatic activity and/or microbial growth. Thereafter, the resultant mixture is separated and portions containing flavor constituents are retained for further use.

### DETAILED DESCRIPTION OF PREFERRED EMBODIMENTS

The present invention is directed toward a process utilizing enzymes and/or microorganisms such as bacteria, fungi and yeast to generate enzymes that will degrade and modify spent vanilla beans, pods and like materials. Typically microorganisms such as bacteria, fungi or yeast generate one or more enzymatic systems chosen from hydrolases (E.C.3.), pectinases (polygalacturonase; EC 3.2.1.15), cellulases (1,4-[1,3;1,4]-β-D-glucan-4-glucano-hydrolase; EC 3.2.1.4), β-glucosidases, proteases (EC 3.4.23), hemicellulases (glycan hydrolase E.C. 3.2.1.), xylanase (1,4-β-D-xylanxylanohydrolase; EC 3.2.1.8), lipases (triacylglycerol lipase EC 3.1.1.3), esterases (E.C.3.1.), proteases (E.C.3.4.), oxidoreductases (EC 1.1.- EC 1.11), and transferases (E.C.2.). These enzymes may be used alone or in a mixture with β-glucosidase. These enzymes are well known to persons skilled in the art and many systems based thereon are commercially available. The broader implication of this discovery includes the economical production of products and intermediary by-products.

It is understood that the present invention covers all enzymatic systems that make it possible to degrade and transform the precursors potentially contained in the spent, i.e., exhausted vanilla materials, and all microbes capable of producing such enzymatic systems. Persons skilled in the art will be able, using simple procedures such as those defined in the examples which follow, to choose the enzymatic and microbial systems that are appropriate. Preferably the spent vanilla materials are treated with an enzymatic system or microbes capable of producing an enzymatic system which comprises at least one enzyme capable of destroying the cell membrane systems of plant cells , and is selected from the group consisting of an enzyme having hydrolase activity, such as pectinase activity, an enzyme having cellulase activity, an enzyme having hemicellulase activity, an enzyme having protease activity, an enzyme having lipase activity, an enzyme having β-glucosidase activity, an enzyme having oxidoreductase activity, or an enzyme having transferase activity. The enzyme so utilized or microbially produced is present in an amount of about 10 to about 1000 units per gram of spent vanilla product.

It is further understood that the spent vanilla beans are ground and hydrated in water. Generally, without being an essential feature of the present invention, spent vanilla pods are present in the amount of between 5 to 50% of the water added.

The enzymatic system advantageously comprises 10 to 1000 units of enzyme activity per gram of spent vanilla pods, and preferably from 20 to 500 units of enzymatic activity. It was observed that a range of between 40 and 400 units of enzymatic activity was even more advantageous for implementing the process according to the invention. The enzymatic reaction is carried out at a pH which is advantageously between about 3 and 10, and preferably at the optimum pH for each individual enzyme system. As the pH of the ground, spent vanilla pods product obtained is approximately equal to 5, this ground product is therefore naturally at the optimal value for enzymes such as cellulases, pectinases, hemicellulases, and β-glucosidases. Enzyme systems containing lipases, proteases, esterases, oxidoreductases and transferases require a pH that is optimal for each enzyme system.

The process is carried out with stirring for a period of time sufficient to allow the degradation and modification of the spent vanilla pods and the release of the natural flavor components. Advantageously, this period will be greater than 2 hours at room temperature. This processing temperature can be increased or decreased while being careful not to exceed a maximum temperature which can result in degradation of the flavor precursors and enzymes. Decrease of the temperature too substantially can cause slowing or cessation of the desired reactions. The temperature will be generally between about 10 and 100 degrees C., preferably between about 30 and 40 degrees C.

Regarding the time that incubation takes place, the period of incubation will be between about 2 and 120 hours. However, it has been observed that the release is generally complete after a few hours of incubation, it being possible for persons skilled in the art to determine substantial completion by means of high performance liquid chromatography (HPLC) or gas chromatography mass spectroscopy (GCMS) analyses. After incubation, the liquid phase containing the vanilla flavor is separated from the solid phase, which contains especially insoluble cell residues. This separation may be carried out, for example, by filtration and/or by centrifugation.

The liquid phase containing the natural flavor compounds and food modifiers may then be used, either directly or after concentration of the compounds. Such concentration may be carried out by evaporation, selective chromatography, optionally under vacuum, and then filtration. It may also be carried out by extraction with solvents and subsequent evaporation of the latter.

The following examples are intended to illustrate the invention without limiting it.

### EXAMPLE 1

This example demonstrates the effect of different enzymes on the release of flavor components and their sensory attributes.

Ten grams (10 g) of dry, spent vanilla pods were ground and mixed with 90 g of deionized water. A slurry consisting of two phases, solid and liquid, was stirred. Different enzymes such as cellulase, xylanase, hemicellulase, pectinase, protease, lipase and oxidoreductase were typically added in the amount of 500-1,000 units per gram of dry spent vanilla pods. These enzymes were applied either alone or in combination with each other. One unit of cellulase liberates 1.0 mmol of reducing sugar measured as glucose_from cellulose in one hour at a pH 5 at 37 degree C. One unit of xylanase liberates 1.0 mmol of reducing sugar measured as xylose equivalents from xylan per minute at pH a 4.5 at 30 degree C. One unit of hemicellulase liberates 1.0 mmol of D-galactose from hemicellulose per hour at a pH 5.5 at 37 degree C. One unit of pectinase liberates 1.0 mmol of galacturonic acid from polygalacturonic acid per minute at a pH 4.0 at 25 degree C. One unit of protease hydrolyzes hemoglobin to produce color equivalent to 1.0 mmol of tyrosine per minute at a pH 2.8 at 37 degree C. One unit of lipase hydrolyzes 1.0 microequivalent of fatty acid from a triglyceride in 1 hour at pH 7.7 at 37 degree C. Activity of laccase is expressed in nanokatal/ml; one nanokatal is the amount of enzyme needed to perform oxidative dimerization of one nanomole of 2,6-dimethoxyphenol (Slomczynski et al., 1995).

The incubation with the enzymes was typically carried out without pH adjustment at the natural pH of around 5.0. The pH was measured after addition of the enzyme and at the end of the enzymatic reaction and recorded. The slurry was mixed while mixture was incubated at 35 degree C, typically for 10 hours. At the end of the reaction, the slurry was filtered rapidly through a Whatman filter paper. A small portion (10 ml) of the filtrate was extracted with 5 ml of methylene chloride. The methylene chloride phase was concentrated and subjected to GC/MS analysis. The remaining filtrate was mixed with 96% alcohol to obtain a 50% aqueous-alcoholic medium. The filtrate was evaluated by sensory panel. The hydrolysis released a number of compounds from spent vanilla beans. Table 1 shows only the level of vanillin released and compares the sensory attributes of the samples.

**Table 1: Effect of different enzymes on spent vanilla pods**

| Enzyme | Vanillin (GC/MS area%) | Sensory Attributes |
|---|---|---|
| | | |
| 1. control | 0 | no aroma or taste |
| | | |
| 2. cellulases | 30 | ice-cream-vanilla flavor, good mouthfeel |
| | | |
| 3. pectinases | 10 | ice-cream-like, creamy vanilla flavor |
| | | |
| 4. hemicellulases | 20 | woody, creamy vanilla flavor |
| | | |
| 5. lipase | 10 | weak vanilla, soapy, chemical flavor |
| | | |
| 6. oxidoreductase laccase | 25 | cooked, creamy vanilla flavor |

### EXAMPLE 2

This example illustrates the effect of a β-glucosidase system on the release of flavor components.

Ten grams (10 g) of dry, spent vanilla pods were ground and mixed with 90 g of deionized water. A slurry consisting of two phases, solid and liquid, was formed and agitated. The enzyme, β-glucosidase, was added in the amount of 53 units of enzyme per gram of dry spent vanilla pods. One unit of enzyme activity is defined as the amount of enzyme which would liberate 1.0 mg of p-nitrophenol from p-nitrophenyl-glucoside at 35 degrees C at pH 5. The incubation of spent vanilla pods with the enzyme b-glucosidase was carried out without pH adjustment at the natural pH of about 5. The pH was measured after addition of the enzyme and at the end of the enzymatic reaction and recorded. The slurry was mixed while incubated at 35 degree C typically for 12 hours.

At the end of the reaction, the solid material was quickly filtered through a Whatman filter paper. A small portion (10 ml) of the filtrate was extracted with 5 ml of methylene chloride. The methylene chloride fraction was concentrated and subjected to GC/MS analysis. The remaining liquid filtrate was mixed with 96% alcohol to obtain a 50% aqueous-alcoholic flavor mixture. This filtrate was evaluated by a sensory panel. The hydrolysis released a number of compounds from the spent vanilla beans. Table 2 shows only the level of vanillin released and defines the sensory attributes of the sample.

**Table 2: Release of flavor compounds from spent vanilla beans by β-glucosidase as detected by GC/MS.**

| Enzyme | Vanillin (mg/l) | Sensory Attributes |
|---|---|---|
| | | |
| β-glucosidase | 155 | creamy, vanilla flavor, ice-cream-like, well rounded |
| | | |
| Control | 11 | dirty, earthy, fermented |

### EXAMPLE 3

This example demonstrates the impact and effect of the flavor and food modifiers prepared from spent vanilla pods in food systems.

Ten grams (10 g) of dry, spent vanilla pods were ground and mixed with 90 g of deionized water. A slurry consisting of two phases, solid and liquid, was stirred. Two enzymes, cellulase and β-glucosidase were added in the amount of 1,000 and 100 units per gram of dry spent vanilla pods, respectively.

The incubation with the enzymes was typically carried out without pH adjustment at the natural pH of around 5.0. The pH was measured after addition of the enzyme and at the end of the enzymatic reaction and recorded. The slurry was mixed while incubated at 35 degree C, typically for 10 hours. At the end of the reaction, the mixture was mixed with 96% ethyl alcohol to obtain 50% aqueous-alcohol solution. The mixture was mixed for 3 hours at room temperature and filtered through a Whatman filter paper. The filtrate was evaluated by a sensory panel.

**Table 3: The impact and effect of the flavor and food modifier prepared from spent vanilla pods.**

| Enzyme | Vanillin (mg/l) | Sensory Attributes |
|---|---|---|
| | | |
| Sample | | sensory attributes of skim milk |
| | | |
| cellulase/β-glucosidase treated sample | | creamy, well rounded, pleasant full-mouthfeel |
| | | |
| Control | | watery, bitter, thin, cardboardy |

### EXAMPLE 4

This Example demonstrates the treatment of spent vanilla materials with microorganisms capable of producing an enzymatic system. Cells of the fungus *Aspergillis niger* were inoculated into 200 ml. of mineral medium consisting of (NH₄)₂SO₄ at 5 g/l, KH₂ PO₄ at 0.2 g/l, CaCl₂.2H₂O at 0.0132 g/l, MgSO₄.7H₂O at 0.5 g/l, yeast extract at 0.5 g/l and glucose at 20 g/l. The cells were grown on a rotary shaker for 40 hours at 30° C. The mycelium produced was collected by filtration and added to 180 ml of water containing 20g of spent vanilla beans and 0.5 g of glucose. A slurry consisting of two phases, one solid and one liquid, was stirred. The incubation with the cells was typically carried out without pH adjustment as the natural pH was around 5.0. The pH was measured after addition of the cells and at the end of the biotransformation and recorded. The slurry was agitated while incubated at 30°C for 14 hours. At the end of the reaction the mixture was mixed with 96% ethyl alcohol to obtain a 50% aqueous -alcohol solution. This solution was then stirred for three hours at room temperature and filtered through a Whatman paper filter. The solute contained notes reminiscent of vanilla extract.

Any microorganisms capable of producing any of the enzymes mentioned hereinbefore are appropriate for use in the present invention to generate vanilla flavor constituents from spent vanilla materials. Microorganisms that have been determined to be appropriate are, without limitation, *Bacillus sp., Escherichia coli, Streptomyces sp., Thermomyces sp., Aspergilus sp., Trichoderma sp., Mucor sp., Chaetomium sp., Polyporus sp., Pychnoporus sp., Trametes sp., Myceliophthera sp., Rhizoniucor sp.,* and *Candida sp.* It will thus be apparent that the microorganisms can be selected from bacteria, fungi and yeast.

When microbial cells are utilized in accordance with my invention, it has been found that the best results have been obtained when the microbial cells are in stationary cells. The microbial cells are maintained during the biotransformation process in a liquid medium containing substances necessary to support the viability of the microorganisms, such media being, for example, nutrient substances, minerals, cofactors, and the like. The general requirements for maintaining the viability of cells is well established an easily determined by a microbiologist for each type of microorganism utilized. Preferably the medium for the microorganism includes YP medium containing assimilable sugars such as sucrose and glucose.

Temperatures from about 10°C to about 40°C for a period of from about 2 hours to about 48 hours, have been usually been found to be sufficient to enable the microorganism to enzymatically transform the flavor precursors and allow the release of natural flavor compounds in the hydrated product. The mixture of solid and liquid phases can be mixed with ethyl alcohol at a concentration of from about 1% to 50% product to enhance the release of natural flavor compounds. Thereafter the liquid phase is separated from the solid phase of the mixture, and the liquid phase that contains the natural flavor extracts together with other soluble materials is recovered. Within these extracts and materials further precursors to other flavors can be present. Some of these flavor compounds can modify taste perception.

It will be apparent to those of skill in this art that the foregoing disclosure is only illustrative of my invention and that modifications thereof and additions thereto will be apparent to those of skill in this art. As to all such modifications and additions, it is desired that they be included within the purview of my invention, which is to be limited only by the scope, including equivalents, of the following, appended claims.

## Claims

1. A process for recovering flavor constituents from spent vanilla materials, comprising forming a mixture of such spent materials, treating the mixture with an enzyme having the ability to degrade the plant cell systems of said materials for period of time and at a pH and temperature such that said cell systems break down and release flavor constituents, and thereafter recovering said flavor constituents from said mixture.

2. A process for recovering flavor constituents from spent vanilla materials, comprising forming an aqueous mixture of such spent materials, treating the mixture with microorganisms selected from the group consisting of bacteria, fungus and yeast to produce an enzyme having the ability to degrade the plant cell systems of said materials for period of time and at a pH and temperature such that said cell systems break down and release flavor constituents, and thereafter recovering said flavor constituents from said mixture.

3. A process as claimed in claim 1 or claim 2, in which said enzyme is selected from the group consisting of a hydrolase, oxidoreductase and transferase and mixtures thereof.

4. A process as claimed in claim 2, in which said enzyme is a hydrolase.

5. A process as claimed in claim 1 or claim 2, in which said enzyme is selected from the group consisting of hydrolases with glucosidase, cellulase, pectinase, hemicellulase, xylanase, and lipase activity.

6. A process as claimed in claim 5, in which said enzyme is β-glucosidase.

7. A process as claimed in claim any of the preceding claims, in which said vanilla materials are spent vanilla pods and beans.

8. A process as claimed in claim 7, in which said mixture is treated with said enzyme for a period of about 1 to 120 hours at a temperature of about 10° to 100° C.

9. A process as claimed in claim 7 or claim 8, in which said mixture is treated with said enzyme at a pH between about 3 and 10.

10. A process as claimed in claim 8, in which said pH is about 5.

11. A process for obtaining flavor constituents from spent vanilla materials, comprising grinding the vanilla materials to increase their exposure to enzymatic activity, forming an aqueous mixture of said ground materials, agitating the mixture to form a slurry consisting of liquid and solid phases, treating the slurry with a microorganism selected from the group consisting of bacteria and yeast and having the ability to produce an enzyme capable of degrading the plant cell systems of said materials for period of time and at a pH and temperature such that said cell systems break down and release said flavor constituents, said enzyme being selected from the group consisting of β-glucosidase and mixtures of β-glucosidase and other enzymes, incubating said mixture for a period of time sufficient to effect substantially complete said reaction and release of said constituents, and thereafter recovering said flavor constituents from said mixture.

12. A process as claimed in claim 11, in which said flavor constituents include flavor precursors.

13. A process as claimed in claim 11 or claim 12, in which said flavor constituents include food modifiers.

14. A process as claimed in any of claims 11 to 13, in which after incubation said mixture is separated into liquid and solid phases and said flavor constituents are recovered from said liquid phase.
